Europäisches Patentamt

European Patent Office

Office européen des brevets

(11) Veröffentlichungsnummer: **0 071 603**
**B1**

(12) **EUROPÄISCHE PATENTSCHRIFT**

(45) Veröffentlichungstag der Patentschrift:
13.02.85

(21) Anmeldenummer: 81902313.6

(22) Anmeldetag: 11.08.81

(86) Internationale Anmeldenummer:
PCT/EP 81/00117

(87) Internationale Veröffentlichungsnummer:
WO 82/02947 (02.09.82 Gazette 82/21)

(51) Int. Cl.⁴: **G 01 M 15/00**

(54) **VERFAHREN UND VORRICHTUNG ZUM ERKENNEN IRREGULÄRER VERBRENNUNGSVORGÄNGE IN EINER BRENNKRAFTMASCHINE.**

(30) Priorität: 19.02.81 DE 3106107

(43) Veröffentlichungstag der Anmeldung:
16.02.83 Patentblatt 83/7

(45) Bekanntmachung des Hinweises auf die Patenterteilung:
13.02.85 Patentblatt 85/7

(84) Benannte Vertragsstaaten:
DE FR GB

(56) Entgegenhaltungen:
DE - A - 2 605 335
DE - A - 2 625 971
DE - A - 2 846 795
DE - A - 2 916 591
FR - A - 2 301 692
US - A - 3 735 347

Die Akte enthält technische Angaben, die nach dem Eingang der Anmeldung eingereicht wurden und die nicht in dieser Patentschrift enthalten sind.

(73) Patentinhaber: ROBERT BOSCH GMBH, Postfach 50, D-7000 Stuttgart 1 (DE)

(72) Erfinder: DAMSON, Eckart, Raststatterstrasse 34, D-7000 Stuttgart 31 (DE)
Erfinder: FRANKE, Horst, Wörthstrasse 2, D-7121 Löchgau (DE)
Erfinder: GROB, Ferdinand, Friedrich-Schelling-Weg 8, D-7122 Besigheim (DE)
Erfinder: MOSER, Winfried, Auf Landern 18, D-7145 Markgröningen (DE)
Erfinder: MÜLLER, Klaus, Schillerstrasse 41, D-7146 Tamm (DE)

(74) Vertreter: Witte, Alexander, Dr.-Ing., c/o Robert Bosch GmbH Robert-Bosch-Platz 1, D-7016 Gerlingen-Schillerhöhe (DE)

**Beschreibung**

Die Erfindung geht aus von einem Verfahren bzw. einer Vorrichtung nach der Gattung des Anspruches 1 bzw. des Anspruches 10.

Es ist bekannt, die im Brennraum einer Brennkraftmaschine ablaufenden Verbrennungsvorgänge während des Betriebes der Brennkraftmaschine nach verschiedenen Gesichtspunkten unter Erfassung verschiedenartiger physikalischer Parameter zu messen. Hierzu gehört beispielsweise die Erfassung der zeitlichen und räumlichen Ausbreitung des Verbrennungsvorganges, die Erfassung des Zündzeitpunktes, die Erfassung von Einspritzvorgängen sowie die Ausmessung von irregulären Verbrennungen.

Zu diesen irregulären Verbrennungen gehört das sogenannte »Klopfen«, das bei Brennkraftmaschinen unter bestimmten Arbeitsbedingungen auftritt. Man versteht hierunter tonfrequente Schwingungen des komprimierten Kraftstoff-Luft-Gemisches, die durch eine Stoßwelle ausgelöst werden. Während dieser Schwingungen ist der Wärmeübergang an Kolben- und Zylinderwänden der Brennkraftmaschine stark erhöht. Dies hat eine schädliche thermische Überlastung dieser Fläche zur Folge, so daß das Klopfen grundsätzlich zu vermeiden ist. Da man jedoch andererseits bestrebt ist, den zur Verfügung stehenden Arbeitsbereich der Brennkraftmaschine möglichst weitgehend auszunutzen, ist es erforderlich, Mittel vorzusehen, die das Klopfen frühzeitig und sicher anzeigen, um auf diese Weise eine Regelung der Brennkraftmaschine realisieren zu können, bei der die Brennkraftmaschine stets kurz unterhalb der Klopfgrenze betrieben wird.

Neben dem Problem, zur Erfassung des Klopfens geeignete Geber bereitzustellen, besteht auch das meßtechnische Problem, aus den vom Geber erfaßten Schwingungen der Brennkraftmaschine das Klopfsignal zuverlässig und störungsfrei herauszulesen, um die Brennkraftmaschine in Abhängigkeit von einem Klopferkennungssignal »Klopfen ja« oder »Klopfen nein« entsprechend regeln zu können.

In der US-A-3 540 262 ist hierzu ein Klopfdetektor beschrieben, bei dem das gemessene Klopfsignal mit einem vorgegebenen, vom Motorsignal unabhängigen Schwellwertsignal verglichen wird und bei Überschreiten des Schwellwertes ein Klopferkennungssignal abgegeben wird. Diese Vorrichtung hat jedoch den Nachteil, daß keine Klopferkennung in bezug auf das Hintergrundgeräusch der Brennkraftmaschine erfolgt, sondern lediglich ein Vergleich mit einem externen, motorunabhängigen Signal durchgeführt wird.

In der US-A-4 012 042 ist weiterhin ein Klopfdetektor beschrieben, bei dem das gemessene Klopfsignal mit einem Referenzsignal verglichen wird, das über einen Funktionsgenerator in Abhängigkeit von der Motordrehzahl erzeugt wird. Dieses Verfahren hat jedoch den Nachteil, daß ebenfalls das tatsächlich auftretende Hintergrundgeräusch der Brennkraftmaschine nicht mit einbezogen, sondern lediglich über einen Funktionsgenerator simuliert wird. Damit wird insbesondere keine Rücksicht auf die jeweilige Betriebsweise, die Einstellung und den Alterungszustand der Brennkraftmaschine genommen.

Schließlich ist aus der DE-A-2 016 591 ein Verfahren zur Feststellung des Klopfens von Brennkraftmaschinen bekannt, bei dem der Spitzenwert des Klopfsignals überwacht und zu den jeweils vorhergehenden erfaßten Spitzenwerten vorhergehender Verbrennungszyklen in Bezug gesetzt wird. Dabei ist unter anderem vorgesehen, die Messung nur während eines sogenannten Meßfensters, d. h. eines zu einem bestimmten Winkelbereich der Drehung der Kurbelwelle korrelierten Zeitintervalles vorzunehmen.

Die genannten Vorrichtungen bzw. Verfahren haben jedoch den Nachteil, daß Nebengeräusche, die keinen Bezug zum Klopfen haben, nicht immer zuverlässig ausgefiltert werden und damit eine Verfälschung des Meßergebnisses eintritt. Dies gilt insbesondere für die Störsignale, die durch das sogannnte »Kolbenkippen« auftreten und durch ihre Amplitude eine erhebliche Überlagerung der Klopfsignale bewirken können.

Das erfindungsgemäße Verfahren mit den kennzeichnenden Merkmalen des Anspruches 1 bzw. die erfindungsgemäße Vorrichtung mit den kennzeichnenden Merkmalen des Anspruches 10 haben demgegenüber den Vorteil, daß die Klopferkennung nicht mehr auf einer festen oder von außen veränderlich vorgegebenen Schaltschwelle aufbaut, sondern die Signalform des hochpaßgefilterten Signals in sich zur Erkennung von irregulären Verbrennungen untersucht wird.

Durch die in den Unteransprüchen aufgeführten Maßnahmen sind vorteilhafte Weiterbildungen des erfindungsgemäßen Verfahrens bzw. der erfindungsgemäßen Vorrichtung möglich.

So wird in vorteilhafter Ausgestaltung der Erfindung ein dem zeitlichen Auftreten des Signalmaximums entsprechender Symmetrieimpuls (SYM) gebildet und Kennwerte für den Signalverlauf vor bzw. nach diesem Impuls gebildet und diese Kennwerte nach jedem Verbrennungszyklus miteinander verglichen. Besonders vorteilhaft ist dabei, diese Kennwerte durch Integration des Signalverlaufes vor bzw. nach dem Symmetrieimpuls SYM zu gewinnen, da dann die Erkennung irregulärer Verbrennungen durch Quotientenbildung der Integrale vorgenommen werden kann. Bei dieser Quotientenbildung ist nämlich ohne Belang, wie die Absolutbeträge der Kennwerte sind, so daß sich Alterungserscheinungen, beispielsweise Fenstertrübungen bei Erfassung des Signals durch einen optischen Sensor, nicht störend auf das Meßergebnis auswirken.

In weiterer bevorzugter Ausgestaltung der Erfindung wird die Messung des Signals nur während eines sogenannten Meßfensters, d. h. eines zeitlich begrenzten Bereiches des Kurbelwellenwinkels, vorgenommen, um Störgrößen, etwa durch Zündung oder dgl., auszublenden. Durch feste Vorgabe dieses Meßfensters wird dabei erreicht, daß der Meßvorgang zu einem bestimmten Zeitpunkt abgebrochen wird, so daß störende Erscheinungen, wie beispielsweise Nachverbrennungen, das Meßergebnis nicht verfälschen.

Zur Anpassung des Meßverfahrens bzw. der Meßvorrichtung an verschiedene Betriebszustände der Brennkraftmaschine wird schließlich in einer weiteren bevorzugten Ausführungsform der Erfindung die ermittelte Symmetrieachse des gemessenen Signals in Abhängigkeit vom jeweiligen Betriebspunkt der Brennkraftmaschine um einen Korrekturwert verschoben.

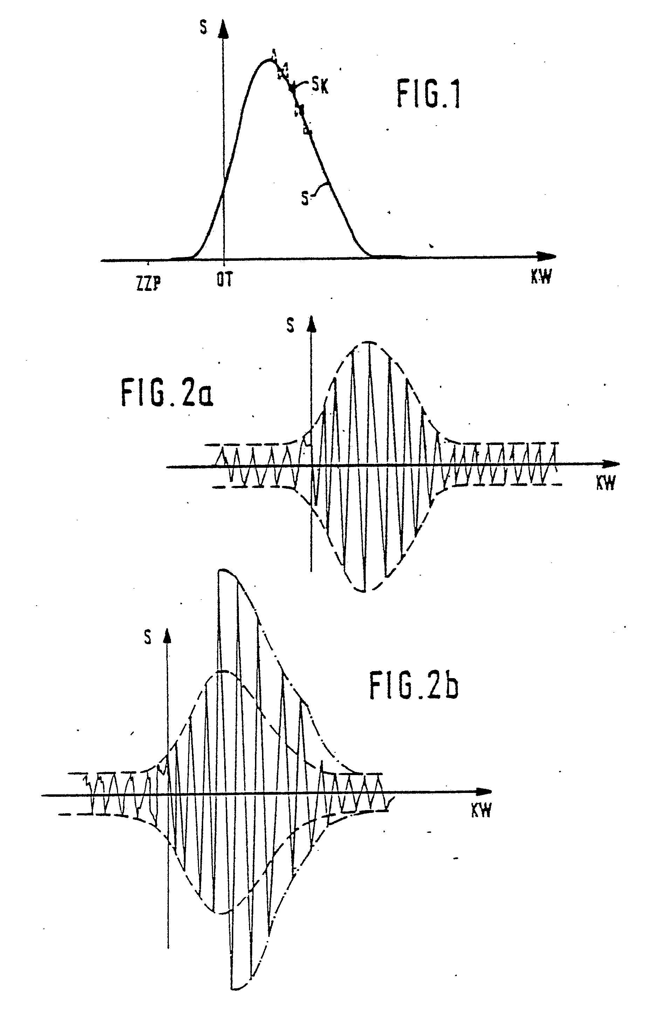

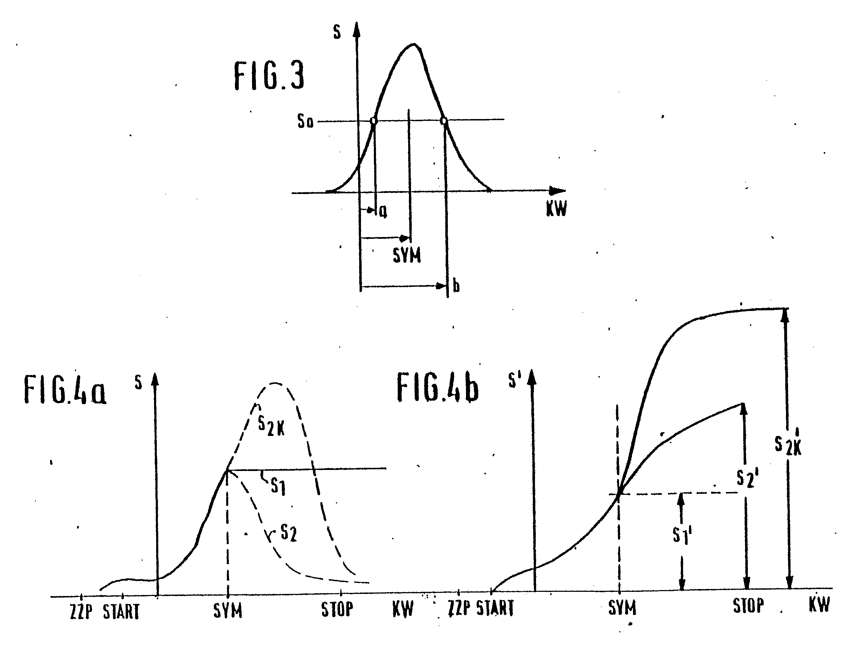

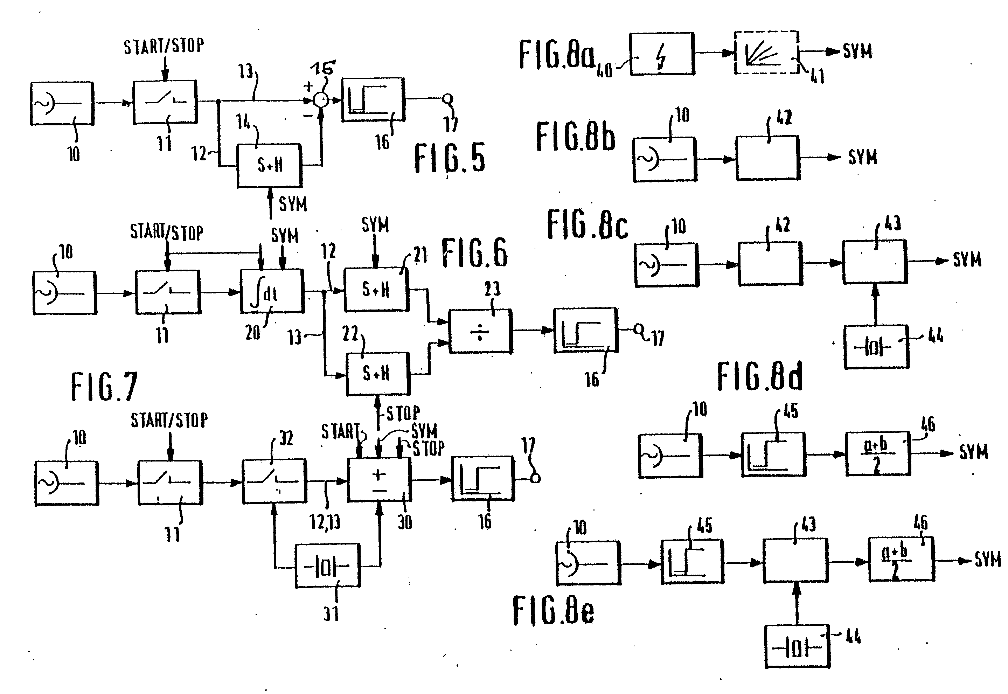

Ausführungsbeispiele der Erfindung sind in der Zeichnung dargestellt und in der nachfolgenden Beschreibung näher erläutert. Es zeigen Figur 1 einen für einen Verbrennungsvorgang einer Brennkraftmaschine typischen Signalverlauf bei normaler und klopfender Verbrennung; Figur 2a ein aus dem Signalverlauf gemäß Figur 1 ermitteltes Meßsignal bei normaler Verbrennung; Figur 2b ein aus dem Signalverlauf gemäß Figur 1 ermitteltes Meßsignal bei irregulärer Verbrennung; Figur 3 eine schematische Darstellung eines Signalverlaufes zur Erläuterung von Schaltschwellen, Figur 4a zeitliche Verläufe von weiterverarbeiteten Meßsignalen entsprechend einer ersten Ausführungsform des erfindungsgemäßen Verfahrens; Figur 4b zeitliche Verläufe von weiterverarbeiteten Meßsignalen gemäß einer zweiten Ausführungsform des erfindungsgemäßen Verfahrens; Figur 5 das Blockschaltbild einer ersten Ausführungsform einer erfindungsgemäßen Vorrichtung zur Durchführung des erfindungsgemäßen Verfahrens; Figur 6 das Blockschaltbild einer zweiten Ausführungsform einer erfindungsgemäßen Vorrichtung zur Durchführung des erfindungsgemäßen Verfahrens; Figur 7 das Blockschaltbild einer dritten Ausführungsform einer erfindungsgemäßen Vorrichtung zur Durchführung des erfindungsgemäßen Verfahrens; Figur 8a bis 8e Blockschaltbilder von verschiedenen Ausführungsformen von Zeitsteuerungen, zur Verwendung in einer der in den Figuren 5 bis 7 dargestellten Vorrichtungen.

In Figur 1 ist über den Kurbelwellenwinkel KW ein Signal S aufgetragen, wie es für einen Verbrennungsvorgang in einer Brennkraftmaschine typisch ist. Ein derartiges Signal kann z. B. ein Licht-, Temperatur- oder Drucksignal sein, wobei die vorliegende Erfindung auf verschiedenen physikalischen Parametern aufbauen kann.

Wie aus Figur 1 ersichtlich, beginnt der Signalverlauf vor der mit OT bezeichneten oberen Totpunktlage des Zylinders und hat im Regelfalle einen näherungsweise glockenförmigen Verlauf. Auf der KW-Achse ist dabei zusätzlich mit ZZP der Zündzeitpunkt bezeichnet. Zusätzlich ist in Figur 1 der Verlauf des Signals für eine klopfende Verbrennung $S_K$ aufgetragen. Man erkennt, daß diese klopfende Verbrennung nach Durchlauf des Signalmaximums auftritt.

In Figur 2a ist ein Signal S aufgetragen, wie es in einer üblichen Hochpaßanordnung gewonnen wird. Das Signal S macht sich dabei als Hüllkurve eines amplitudenmodulierten Störsignals bemerkbar. Während Figur 2a dabei das Meßsignal für eine reguläre Verbrennung darstellt, ist in Figur 2b zusätzlich der Verlauf für eine klopfende Verbrennung dargestellt. Denkt man sich nun eine Symmetrieachse durch das Signalmaximum in Figur 2a bzw. Figur 2b, wird ohne weiteres ersichtlich, daß der Signalverlauf der klopfenden Verbrennung, wie er in Figur 2b dargestellt ist, hinsichtlich dieser Symmetrieachse unsymmetrisch ist.

Erfindungsgemäß wird daher ein Kriterium dafür, ob eine irreguläre Verbrennung vorliegt oder nicht, aus einer Untersuchung der Symmetrie des Signals zur Achse durch das Signalmaximum gewonnen.

Zur Markierung der Symmetrieachse wird dabei erfindungsgemäß ein Symmetrieimpuls SYM gebildet. Dieser Symmetrieimpuls wird in einer Ausführungsform der Erfindung in einfacher Weise dadurch gebildet, daß das Zündsignal ZZP bzw. das OT-Signal um einen vorgegebenen Betrag zeitlich versetzt wird. In einer weiteren Ausführungsform der Erfindung wird der SYM-Impuls aus dem tatsächlichen Signalmaximum ermittelt und zwar während eines oder durch Mittelwertbildung während mehrerer Verbrennungszyklen. Schließlich ist es möglich, das Signal S auf Über- bzw. Unterschreiten eines Schwellwertes $S_0$ zu untersuchen, wie dies in Figur 3 veranschaulicht ist. Wie ohne weiteres ersichtlich, kann der SYM-Impuls durch Bildung des arithmetischen Mittelwertes der Punkte gewonnen werden, die dem Über- bzw. Unterschreiten der Schwelle $S_0$ zugeordnet sind. Dieses Verfahren hat den Vorteil, daß die Ermittlung des Signalmaximums unabhängig von der Signalamplitude ist.

In Figur 4a ist ein erstes Verfahren zur Bildung eines Erkennungssignals veranschaulicht. Danach wird in einem Meßfenster, das durch einen Startimpuls START und einen Stopimpuls STOP begrenzt wird, eine Messung des Signalverlaufs nach Figur 2a bzw. 2b vorgenommen, wobei der Augenblickswert des Signals $S_1$ im Signalmaximum, d. h. zum Zeitpunkt des Auftretens des SYM-Impulses festgehalten wird. Das Signal $S_1$ charakterisiert dabei den vor dem Signalmaximum liegenden Signalverlauf. Im Falle einer regulären Verbrennung schließt sich ein Signalverlauf $S_2$ an, im Fall einer irregulären Verbrennung ein Signalverlauf $S_{2k}$. Durch Vergleich dieser den zweiten Teil des Signalverlaufes charakterisierenden Größen $S_2$ bzw. $S_{2k}$ mit der Größe $S_1$ kann nun ermittelt werden, ob eine reguläre oder eine irreguläre Verbrennung vorgelegen hat.

Ein weiteres Verfahren ist in Figur 4b veranschaulicht. Im Gegensatz zu dem anhand von Figur 4a erläuterten Verfahren wird dabei nicht die Signalamplitude S, sondern das hier mit S' bezeichnete zeitliche Integral des Signals ausgewertet. Hierzu wird der Signalverlauf S in der Zeit von START bis SYM integriert, wie dies durch S' in Figur 4b dargestellt ist. Der Entwert zum Zeitpunkt SYM ist dann $S_1'$. Läuft der Integrator nun weiter, ergibt sich zum Zeitpunkt STOP ein Endwert $S_2'$ bei regulärer Verbrennung und ein Endwert $S_{2k}'$ für irreguläre Verbrennung. Wegen der bei regulärer Verbrennung zu SYM symmetrischen Kurve ist der Wert $S_2'$ doppelt so groß wie der Wert $S_1'$. Bei irregulärer Verbrennung ist der Wert $S_{2k}'$ entsprechend größer. Ein Kriterium für das Vorliegen bzw. Nichtvorliegen einer irregulären Verbrennung läßt sich dann in einfacher Weise durch Differenz- oder Quotientenbildung erreichen.

In Figur 5 ist das Blockschaltbild einer ersten Vorrichtung zur Durchführung eines erfindungsgemäßen Verfahrens dargestellt. Ein Sensor 10, beispielsweise ein Licht-, Druck- oder Temperatursensor ist an einen Schalter 11 angeschlossen, der in Abhängigkeit vom START/STOP-Signal betätigt wird und damit das Meßfenster bestimmt. Der Schalterausgang führt auf einen ersten Signalzweig 12 und einen zweiten Signalzweig 13. Der erste Signalzweig 12 enthält eine Sample-and-Hold-Stufe 14, die vom SYM-Impuls gesteuert wird. Der zweite Signalzweig 13 leitet das Signal im wesentlichen unverändert auf einen Differenzpunkt 15, an den auch der Ausgang der Sample-and-Hold-Stufe 14 angeschlossen ist. Der Differenzpunkt 15 bildet den Eingang eines Komparators 16, der an eine Ausgangsklemme 17 angeschlossen ist. Durch die in Figur 5 dargestellte Anordnung wird ein Verfahren durchgeführt, wie es oben zu Figur 4a erläutert wurde. Vor Auftreten des SYM-Impulses wird das Signal S über den ersten Zweig 12 und den zweiten Zweig 13 gleichermaßen an den Differenzpunkt 15 geleitet, so daß dessen Ausgang Null ist. Tritt der SYM-Impuls auf, wird der Augenblickswert $S_1$ festgehalten und auf dem zweiten Zweig 13 der sich anschließende Signalverlauf $S_2$ bzw. $S_{2k}$ weitergeleitet. Im nachgeschalteten Komparator 16 wird nun erkannt, ob das nach dem SYM-Impuls auftretende Signal größer als der festgehaltene Wert ist oder nicht und es wird entsprechend ein Erkennungssignal an die Klemme 17 weitergeleitet. Selbstverständlich ist es erfindungsgemäß auch möglich, das Signal hinter dem Schalter 11 über einen Spitzenwertmesser zu leiten, so daß die Meßdauer nach Auftreten des SYM-Impulses beliebig lang gewählt werden kann.

Bei der in Figur 6 dargestellten Anordnung wird im Gegensatz zu der in Figur 5 dargestellten nicht die Signalamplitude, sondern das zeitliche Integral des Signals überwacht, wie dies oben anhand von Figur 4b erläutert wurde. Hierzu ist dem Schalter 11 ein Integrator 20 nachgeschaltet, der auf die beiden Signalzweige 12, 13 führt, wobei in dieser Ausführungsform beide Signalzweige eine Sample-and-Hold-Stufe 21 bzw. 22 enthalten. Die Ausgänge dieser Stufen 21, 22 sind auf einen Quotientenbildner 23 geführt, der an den Komparator 16 mit nachgeordneter Klemme 17 angeschlossen ist. Der Schalter 11 bestimmt auch in diesem Falle die Länge des Meßfensters. Der Integrator 20 wird zum Zeitpunkt START auf Null gesetzt und beginnt das vom Sensor 10 eintreffende Signal zu integrieren. Zum Zeitpunkt SYM wird der Augenblickswert des Integrators $S_1'$ in der Sample-and-Hold-Stufe 21 gespeichert. Zum Zeitpunkt STOP geschieht dies analog in der Sample-and-Hold-Stufe 22. Die in den Stufen 22 und 21 gespeicherten Werte werden alsdann im Quotientenbildner 23 durcheinander dividiert, wobei bei regulärer Verbrennung am Ausgang der Stufe 23 der Wert 2 und bei irregulärer Verbrennung ein Wert größer als 2 auftritt, was durch den Komparator 16 erkannt wird. Natürlich ist es auch möglich, den Integrator 20 zum Zeitpunkt SYM auf Null zurückzusetzen, wodurch der Quotientenbildner 23 bei regulärer Verbrennung den Wert 1 und bei irregulärer Verbrennung einen Wert größer als 1 ermitteln würde. Statt eines Quotientenbildners 23 kann selbstverständlich auch ein Subtrahierer eingesetzt werden, wodurch sich die Bedingung für das Erkennen einer irregulären Verbrennung entsprechend verändert.

In Figur 7 ist schließlich eine dritte Ausführung einer erfindungsgemäßen Anordnung dargestellt, die eine Vereinfachung der in Figur 6 dargestellten Anordnung ist. Der Integrator ist in diesem Fall durch einen Addierer/Subtrahierer 30 ersetzt, der von einem Taktgenerator 31 gesteuert wird, der weiterhin einen vor dem Addierer/Subtrahierer 30 angeordneten weiteren Schalter 32 steuert. Die Integration wird danach in diesem Falle durch Addition von hintereinanderliegenden Signalwerten übernommen, wobei der Signalverlauf vor dem Auftreten des SYM-Impulses aufaddiert und nach Auftreten des SYM-Impulses subtrahiert wird, so daß bei regulärer Verbrennung am Ende der Messung am Ausgang des Addierer/Subtrahierers 30 der Wert Null liegt. Selbstverständlich ist es auch möglich, in der ersten Meßphase zu subtrahieren und in der zweiten Meßphase zu addieren oder die Signalverläufe in den beiden Meßphasen jeweils zu addieren und zwischenzuspeichern und die Endwerte miteinander zu vergleichen, ähnlich wie dies in Figur 6 mit den Signalamplituden erfolgt oder in entsprechender Weise statt eines Addierers einen Vorwärts/Rückwärtszähler zu verwenden.

In Figur 8a bis 8e sind verschiedene Ausführungsformen von Vorrichtungen dargestellt, die zur Erzeugung des SYM-Impulses verwendet werden.

In Figur 8a wird der SYM-Impuls von einer Zündanlage 40 der Brennkraftmaschine durch zeitlichen Versatz gegenüber dem Zündzeitpunkt ZZP bzw. dem OT-Signal gewonnen. Der Zündanlage ist dabei gegebenenfalls ein Kennfeld 41 zur betriebspunktabhängigen Verschiebung des SYM-Impulses nachgeschaltet.

In Figur 8b wird der SYM-Impuls aus dem Signal S des Sensors 10 selbst ermittelt, wobei mit einem Spitzenwertmesser 42 das Auftreten des Signalmaximums bei einer regulären Verbrennung gemessen und daraus die Lage des SYM-Impulses ermittelt wird.

Auch bei der Vorrichtung gemäß Figur 8c wird die Lage des SYM-Impulses aus dem Signalverlauf S selbst ermittelt, jedoch nicht aus einem, sondern als Mittelwert aus mehreren Verbrennungszyklen. Hierzu ist dem Spitzenwertmesser 42 ein Mittelwertbildner 43 nachgeschaltet, der von einem Taktgenerator 44 angesteuert wird. Der Mittelwertbildner 43 bildet den zeitlichen Mittelwert der die Lage des SYM-Impulses charakterisierenden Werte.

Bei der Vorrichtung gemäß Figur 8d wird der SYM-Impuls nach dem Verfahren ermittelt, wie es oben zu Figur 3 erläutert wurde. Dem Sensor 10 ist dabei ein Komparator 45 nachgeschaltet, der auf die Schaltschwelle $S_0$ eingestellt ist. Die dem Über- bzw. Unterschreiten des Schwellwertes $S_0$ zugeordneten Werte des Kurbelwellenwinkels bzw. der Zeit a und b werden in einem nachfolgenden Mittelwertbildner 48 arithmetisch gemittelt, so daß sich insgesamt die Lage des SYM-Impulses ergibt.

In Figur 8e ist die Vorrichtung nach Figur 8d erweitert dargestellt, so daß auch hier zeitliche Mittelwertmessungen möglich sind, wie dies bereits oben zu Figur 8c erläutert wurde. Hierzu ist ein zeitlicher Mittelwertbildner 43 mit Taktgenerator 44 dem Komparator 45 nachgeschaltet, so daß die Werte a, b zunächst zeitlich gemittelt und erst dann arithmetisch gemittelt werden.

**Patentansprüche**

1. Verfahren zum Erkennen irregulärer Verbrennungsvorgänge in einer Brennkraftmaschine, bei dem ein den Verbrennungsverlauf charakterisierender Parameter in Abhängigkeit vom Kurbelwellenwinkel oder der seit dem Zündzeitpunkt verstrichenen Zeit mittels eines Sensors (10) erfaßt wird, wobei aus dem Ausgangssignal des Sensors ein elektrisches Meßsignal erzeugt wird, dessen Amplituden zur Fehlererkennung ausgewertet werden, dadurch gekennzeichnet, daß für das Meßsignal eine Symmetrieachse festgelegt wird, deren Lage im wesentlichen durch den Maximalwert der Amplituden des Meßsignals bestimmt ist, daß der Amplitudenverlauf des Meßsignals auf Symmetrie bezüglich dieser Symmetrieachse untersucht wird, und daß bei Nichtvorliegen einer Symmetrie ein Erkennungssignal abgegeben wird.

2. Verfahren nach Anspruch 1, dadurch gekennzeichnet, daß das Meßsignal innerhalb eines vorgegebenen Meßfensters gebildet wird.

3. Verfahren nach Anspruch 2, dadurch gekennzeichnet, daß das Meßfenster durch den Verbrennungsbeginn und durch das Verbrennungsende festgelegt ist.

4. Verfahren nach Anspruch 2 oder 3, dadurch gekennzeichnet, daß das Meßfenster durch feste Zeiten nach dem Zündzeitpunkt festgelegt ist.

5. Verfahren nach einem der Ansprüche 1 bis 4, dadurch gekennzeichnet, daß die Symmetrieachse um einen vorgegebenen Kurbelwellenwinkel oder um einen vorgegebenen Zeitabstand nach dem Zündzeitpunkt oder nach dem oberen Totpunkt (OT) eines Kolbens der Brennkraftmaschine festgelegt wird.

6. Verfahren nach einem der Ansprüche 1 bis 4, dadurch gekennzeichnet, daß die Symmetrieachse durch das Auftreten des tatsächlichen Maximalwerts des Meßsignals festgelegt wird.

7. Verfahren nach einem der Ansprüche 1 bis 4, dadurch gekennzeichnet, daß die Symmetrieachse durch eine Mittelwertbildung der Kurbelwellenwinkel oder Zeitpunkte festgelegt wird, bei denen die Amplitude des Meßsignals vorgegebenen Schwellwerte erreicht.

8. Verfahren nach einem der Ansprüche 1 bis 7, dadurch gekennzeichnet, daß die Symmetrieachse durch eine Mittelwertbildung der momentanen und früher festgelegter Symmetrieachsen festgelegt sind.

9. Verfahren nach einem der Ansprüche 1 bis 8, dadurch gekennzeichnet, daß das Integral des Meßsignals über dem Kurbelwellenwinkel oder über der Zeit gebildet wird und daß die Integrale des Meßsignals beiderseits der Symmetrieachse miteinander verglichen werden, vorzugsweise durch Differenz- oder Quotientenbildung.

10. Vorrichtung zum Erkennen irregulärer Verbrennungsvorgänge in einer Brennkraftmaschine, bei der ein den Verbrennungsverlauf charakterisierender Parameter in Abhängigkeit vom Kurbelwellenwinkel oder der seit dem Zündzeitpunkt verstrichenen Zeit mittels eines Sensors (10) erfaßt wird, wobei aus dem Ausgangssignal des Sensors ein elektrisches Meßsignal erzeugt wird, dessen Amplituden zur Fehlererkennung ausgewertet werden, dadurch gekennzeichnet, daß eine Einrichtung (14 bzw. 21, 22, 23 bzw. 30, 31) zur getrennten Erfassung der Meßsignale zu beiden Seiten einer im wesentlichen durch den Maximalwert der Amplituden des Meßsignals bestimmten Symmetrieachse vorgesehen ist und daß mit der genannten Einrichtung ein Komparator (16) zum Erkennen einer Unsymmetrie der genannten Meßsignale verbunden ist.

11. Vorrichtung nach Anspruch 10, dadurch gekennzeichnet, daß ein Spitzenwertmesser (42) zur Bildung des die Symmetrieachse definierenden Symmetrieimpulses (SYM) vorgesehen ist.

12. Vorrichtung nach Anspruch 11, dadurch gekennzeichnet, daß dem Spitzenwertmesser (42) ein Mittelwertbildner (43) zur Bildung des zeitlichen Mittelwertes des Auftretens des Symmetrieimpulses (SYM) nachgeschaltet ist.

13. Vorrichtung nach Anspruch 10, dadurch gekennzeichnet, daß das Meßsignal einem Komparator (45) zugeführt wird, der bei Über- und Unterschreiten eines ihm vorgegebenen Schwellwertes ($S_0$) ein Zeitsignal (a, b) bildet und daß Schaltmittel (46) vorgesehen sind, die einen Symmetrieimpuls (SYM) aus dem arithmetischen Mittelwert der Zeitsignale bilden.

14. Vorrichtung nach Anspruch 13, dadurch gekennzeichnet, daß den Schaltmitteln (46) ein Mittelwertbildner (43) zur Bildung des zeitlichen Mittelwerts ds arithmetischen Mittelwertes vor- oder nachgeschaltet ist.

15. Vorrichtung nach einem der Ansprüche 10 bis 14, dadurch gekennzeichnet, daß der Symmetrieimpuls (SYM) betriebspunktabängig um einen Korrekturwert zeitlich verschiebbar ist.

16. Vorrichtung nach einem der Ansprüche 10 bis 15, dadurch gekennzeichnet, daß ein erster Signalzweig (12) eine vom Symmetrieimpuls (SYM) angesteuerte Sample-and-Hold-Stufe (14) enthält und ein zweiter Signalzweig (13) das Meßsignal im wesentlichen unverändert weiterleitet.

17. Vorrichtung nach einem der Ansprüche 10 bis 15, dadurch gekennzeichnet, daß den beiden Signalzweigen (12, 13) ein von einem Start- bzw. Stopimpuls (START, STOP) eines Meßfensters angesteuerter Integrator (20) vorgeschaltet ist, daß der erste Signalzweig (12) eine vom Symmetrieimpuls (SYM) gesteuerte Sample-and-Hold-Stufe (21) und der zweite Signalzweig (13) eine vom Stopimpuls (STOP) gesteuerte Sample-and-Hold-Stufe (22) enthält, deren Ausgänge auf einen als Differenz- oder Quotientenbildner (23) ausgestalteten Vergleicher geführt sind.

18. Vorrichtung nach Anspruch 17, dadurch gekennzeichnet, daß der Integrator als von einem Taktgenerator (31) angesteuerter Addierer/ Subtrahierer (30) ausgebildet ist.

19. Vorrichtung nach Anspruch 18, dadurch gekennzeichnet, daß die Signalzweige in dem von dem Taktgenerator (31) angesteuerten Addierer/Subtrahierer (30) zusammengefaßt sind, wobei der erste Signalzweig (12) vom Start- bis zum Symmetrieimpuls (START, SYM) über den Addierer und der zweite Signalzweig (13) vom Symmetrie- bis zum Stopimpuls (SYM, STOP) über den Subtrahierer bzw. umgekehrt geführt werden.

## Claims

1. Method for detecting irregular combustion processes in an internal combustion engine, in which method a parameter characterising the progress of combustion is detected by means of a sensor (10) as a function of the cam shaft angle or of the time elapsed since the ignition point, and from the output signal of the sensor an electric measurement singal is generated, the amplitudes of which are evaluated for fault detection purposes, characterised in that, for the measurement signal, an axis of symmetry is established, the position of which is essentially determined by the maximum value of the amplitudes of the measurement signal, that the variation of amplitudes of the measurement signal is examined for symmetry with respect to this axis of symmetry and that a detection signal is emitted if symmetry is not present.

2. Method according to Claim 1, characterised in that the measurement signal is formed within a predetermined measurement window.

3. Method according to Claim 2, characterised in that the measurement window is established by the beginning of combustion and by the end of combustion.

4. Method according to Claim 2 or 3, characterised in that the measurement window is established by fixed times following the ignition point.

5. Method according to one of Claims 1 to 4, characterised in that the axis of symmetry is established about a predetermined cam shaft angle or about a predetermined time interval following the ignition point or the top dead centre of a piston of the internal combustion engine.

6. Method according to one of Claims 1 to 4, characterised in that the axis of symmetry is established by the occurrence of the actual maximum value of the measurement signal.

7. Method according to one of Claims 1 to 4, characterised in that the axis of symmetry is established by forming the mean of the cam shaft angles or times at which the amplitude of the measurement signal reaches predetermined threshold values.

8. Method according to one of Claims 1 to 7, characterised in that the axis of symmetry is established by forming the mean of the instantaneous and proviously established axes of symmetry.

9. Method according to one of Claims 1 to 8, characterised in that the integral of the measurement signal over the cam shaft angle or over time is formed and that the integrals of the measurement signals on both sides of the axis of symmetry are compared with each other, preferably by forming differences or quotients.

10. Device for detecting irregular combustion processes in an internal combustion engine, in which device a parameter characterising the progress of combustion is detected by means of a sensor (10) as a function of the cam shaft angle or of the time elapsed since th ignition point, and from the output signal of the sensor an electric measurement signal is generated, the amplitudes of which are evaluated for fault detection purposes, characterised in that a device (14 and 21, 22, 23 and 30, 31) for serparately detecting the measurement signals on both sides of an axis of symmetry, essentially determined by the maximum value of the amplitudes of the measurement signal, is provided and that a comparator (16) is connected to the said device for the purpose of detecting any asymmetry in the said measurement signals.

11. Device according to Claim 10, characterised in that a peak-reading meter (42) is provided for the purpose of forming the symmetry pulse (SYM) defining the axis of symmetry.

12. Device according to Claim 11, characterised in that the peak-reading meter (42) is followed in the circuit by an averaging stage (43) for forming the mean in time of the occurrence of the symmetry pulse (SYM).

13. Device according to Claim 10, characterised in that the measurement signal is supplied
to a comparator (45) which forms a time signal
(a, b) when the signal exceeds or drops below a
threshold value ($S_0$), predetermined for this comparator, and that switching means (46) are provided which form a symmetry pulse (SYM) from
the arithmetic means of the time signals.

14. Device according to Claim 13, characterised in that the switching means (46) are preceded or followed in the circuit by an averaging
stage (43) for forming the mean in time of the
arithmetic mean.

15. Device according to one of Claims 10 to 14,
characterised in that the symmetry pulse (SYM)
is displaceable in time by a correction value as a
function of the operating point.

16. Device according to one of Claims 10 to 15,
characterised in that a first signal branch (12)
contains a sample-and-hold stage (14) which is
gated by the symmetry pulse (SYM) and a second signal branch (13) passes on the measurement signal in an essentially unchanged condition.

17. Device according to one of Claims 10 to 15,
characterised in that the two signal branches (12,
13) are preceded in the circuit by an integrator
(20) which is gated by a start or stop pulse
(START, STOP) of a measurement window, that
the first signal branch (12) contains a sample-
and-hold stage (21) which is gated by the
symmetry pulse (SYM), and the second signal
branch (13) contains a sample-and-hold stage
(22) which is gated by the stop pulse (STOP) and
the outputs of which are connected to a comparator constructed as difference- or quotient-
forming stage (23).

18. Device according to Claim 17, characterised in that the integrator is constructed as an
adding/subtracting stage (30) which is gated by
a clock generator (31).

19. Device according to Claim 18, characterised in that the signal branches are combined in
the adding/subtracting stage (30) gated by the
clock generator (31), the first signal branch (12)
being passed from the start pulse (START) up to
the symmetry pulse (SYM) via the adding stage
and the second signal branch (13) being passed
from the symmetry pulse (SYM) up to the stop
pulse (STOP) via the subtracting stage or conversely.

**Revendications**

1. Procédé pour détecter les opérations de
combustions irrégulières dans un moteur à combustion interne, selon lequel on détermine un
paramètre caractérisant le déroulement de la
combustion en fonction de l'angle du vilebrequin
ou du temps écoulé depuis l'instant de l'allumage à l'aide d'un capteur (10), on génère un
signal de mesure, électrique à partir su signal de
sortie du capteur, signal dont l'amplitude est exploitée pour détecter l'erreur, caractérisé en ce
que pour le signal de mesure, on fixe un axe de
symétrie dont la position est déterminée essentiellement par la valeur maximale des amplitudes
du signal de mesure, en ce qu'on examine la
symétrie du profil de l'amplitude du signal de
mesure par rapport à cet axe de symétrie et en
l'absence de symétrie, on fournit un signal de
reconnaissance.

2. Procédé selon la revendication 1, caractérisé en ce qu'on forme le signal de mesure dans
une fenêtre de mesure, prédéterminée.

3. Procédé selon la revendication 2, caractérisé en ce qu'on détermine la fenêtre de mesure
par le début de la combustion et par la fin de la
combustion.

4. Procédé selon la revendication 2 ou 3, caractérisé en ce qu'on détermine la fenêtre de mesure par des instants fixes après l'instant d'allumage.

5. Procédé selon l'une des revendications 1 à
4, caractérisé en ce qu'on fixe l'axe de symétrie
à un angle de vilebrequin, prédéterminé ou à un
temps prédéterminé après l'instant d'allumage
ou après le point mort haut (OT) d'un piston du
moteur à combustion interne.

6. Procédé selon l'une des revendications 1 à
4, caractérisé en ce qu'on fixe l'axe de symétrie
par l'arrivée de la valeur maximale réelle su signal de mesure.

7. Procédé selon l'une des revendications 1 à
4, caractérisé en ce qu'on fixe l'axe de symétrie
en formant une moyenne de l'angle de vilebrequin ou des instants auxquels l'amplitude du signal de mesure atteint des valeurs de seuil prédéterminées.

8. Procédé selon l'une des revendications 1 à
7, caractérisé en ce qu'on fixe l'axe de symétrie
en formant une moyenne des axes de symétrie
instantanée et fixée précédemment.

9. Procédé selon l'une des revendications 1 à
8, caractérisé en ce qu'on forme l'intégrale du
signal de mesure en fonction de l'angle du vilebrequin ou du temps et en ce qu'on compare
entre les intégrales du signal de mesure de part
et d'autre de l'axe de symétrie, de préférence en
formant une différence ou un quotient.

10. Dispositif pour reconnaître des opérations
de combustions irrégulières dans un moteur à
combustion interne, dans lequel on détecte un
paramètre caractéristique du déroulement de la
combustion en fonction de l'angle du vilebrequin
ou encore le temps écoulé à partir de l'instant
d'allumage à l'aide d'un capteur (10), un signal
de mesure, électrique étant formé à partir du
signal de sortie du capteur, signal dont l'amplitude est exploitée pour la détection de l'erreur,
caractérisé en ce qu'il est prévu une installation
(14, 21, 22, 23, 30, 31) pour la détection séparée
des signaux de mesure des deux côtés d'un axe
de symétrie déterminés essentiellement par la
valeur maximale des amplitudes du signal de
mesure, et en ce qu'à l'installation ci-dessus est
relié un comparateur (16) pour reconnaître une
asymétrie des signaux de mesure ci-dessus.

11. Dispositif selon la revendication 10, caractérisé en ce qu'un circuit de mesure de maximum (42) est prévu pour former l'impulsion de symétrie (SYM) qui définit l'axe de symétrie.

12. Dispositif selon la revendication 11, caractérisé en ce que le circuit de mesure de maximum (42) est suivi par un circuit de formation de moyenne (43) pour former la valeur moyenne dans le temps de l'arrivée de l'impulsion de symétrie (SYM).

13. Dispositif selon la revendication 10, caractérisé en ce que le signal de mesure est appliqué à un comparateur (45) qui, lors du dépassement vers le haut ou vers le bas d'un seuil ($S_0$) qui lui est prédéterminé, forme un signal de temps (a, b) et en ce que des moyens de commutation (46) sont prévus pour former une impulsion de symétrie (SYM) à partir de la moyenne arithmétique des signaux de temps.

14. Dispositif selon la revendication 13, caractérisé en ce qu'en amont ou en aval des moyens de commutation (46), il est prévu un circuit de formation de moyenne (43) pour former la valeur moyenne dans le temps de la valeur moyenne arithmétique.

15. Dispositif selon l'une des revendications 10 à 14, caractérisé en ce que l'impulsion de symétrie (SYM) peut être déplacée dans le temps, d'une valeur de correction, suivant le point de fonctionnement.

16. Dispositif selon l'une des revendications 10 à 15, caractérisé en ce qu'une première branche de signal (12) comporte un étage d'échantillonnage et de maintien (14) commandé par l'impulsion de symétrie (SYM) et une seconde branche de signal (13) qui transmet le signal de mesure essentiellement à l'état inchangé.

17. Dispositif selon l'une des revendications 10 à 15, caractérisé en ce que les deux branches de signal (12, 13) sont précédées par un intégrateur (20) commandé par l'impulsion de départ et l'impulsion d'arrêt (START, STOP) d'une fenêtre de mesure, en ce que la première branche de signal (12) comporte un étage d'échantillonnage et de maintien (21) commandé par l'impulsion de symétrie (SYM) et la seconde branche de signal (13) contient un étage d'échantillonnage et de maintien (22) commandé par l'impulsion d'arrêt (STOP), étages dont les sorties sont appliquées à un comparateur formant un circuit de différence ou de quotient (23).

18. Dispositif selon la revendication 17, caractérisé en ce que l'intégrateur est constitué par un additionneur/soustracteur (30) commandé par un générateur de cadence (31).

19. Dispositif selon la revendication 18, caractérisé en ce que les branches de signaux se réunissent dans l'additionneur/soustracteur (30) commandé par le générateur de cadence (31), la première branche de signal (12) passant entre l'impulsion de départ et l'impulsion de symétrie (START, SYM) par l'additionneur et la seconde branche de signal (13) passant par le soustracteur entre l'impulsion de symétrie et l'impulsion d'arrêt (SYM, STOP) ou inversement.

FIG.1

FIG.2a

FIG.2b

FIG.3

FIG.4a

FIG.4b

FIG.8a

FIG.8b

FIG.8c

FIG.8d

FIG.8e

FIG.5

FIG.6

FIG.7